# EUROPEAN PATENT SPECIFICATION

(11) **EP 1 580 732 B1**
(45) Date of publication and mention of the grant of the patent: **12.03.2008**
(21) Application number: 05006374.2
(22) Date of filing: 23.03.2005
(51) Int. Cl.: G11B 5/596, G11B 5/86, G11B 5/82

(54) **Magnetic recording medium, method of producing the magnetic recording medium, patterned master carrier for magnetic transfer employed during production of the magnetic recording medium, and magnetic recording/reproducing apparatus**
Magnetisches Auzeichnungsmedium, Verfahren zur Herstellung des magnetischen Auzeichnungsmediums, gemusterte Informationsträgermatrize für magnetische Übertragung, die während der Herstellung des magnetischen Aufzeichnungsmediums verwendet wird und magnetisches Aufzeichnungs/wiedergabegerät
Milieu d'enregistrement magnétique, méthode de fabrication du milieu d'enregistrement magnétique, support-maître d'informations à motif pour transfert magnétique, utilisé pendant la fabrication du milieu d'enregistrement magnétique et appareil d'enregistrement/reproduction magnétique

(30) Priority: 25.03.2004 JP 2004089674
(43) Date of publication of application: 28.09.2005
(73) Proprietor: FUJIFILM Corporation, Minato-ku Tokyo (JP)
(72) Inventor: Yasunaga, Tadashi, Odawara-shi Kanagawa-ken (JP)
(74) Representative: HOFFMANN EITLE

(56) References cited:
- EP-A- 1 256 940
- EP-A- 1 383 114
- WO-A-00/68947
- US-A- 5 943 180

## Description

### BACKGROUND OF THE INVENTION

### Field of the Invention

The present invention relates to a magnetic recording medium comprising: a substrate; and a magnetic layer, on which an amplitude servo pattern is recorded, the amplitude servo pattern comprising: an A burst bit row, formed of A burst bits which are recorded across a first track and a second track adjacent thereto; and a B burst bit row, formed of B burst bits which are recorded across the second track and a third track adjacent thereto at a position different from that of the A burst bit row in the track direction, wherein: the lengths in the track width direction, of the recording region of the A burst bits and the recording region of the B burst bits are greater than a track pitch. The present invention further relates to a method for producing such a recording medium.

The present invention also relates to a patterned master carrier for magnetic transfer, comprising a substrate; and a magnetic layer, on which an amplitude servo pattern is recorded, the amplitude servo pattern comprising: an A element row, formed of A burst bit elements which are recorded across a first track and a second track adjacent thereto; and a B element row, formed of B burst bit elements which are recorded across the second track and a third track adjacent thereto at a position different from that of the A burst bit row in the track direction; wherein: the lengths, in the track width direction, of the upper surfaces of the A burst bit elements and the upper surfaces of the B burst bit elements are greater than a track pitch.

The present invention further relates to a magnetic recording/reproduction apparatus housing the magnetic recording medium.

### Description of the Related Art

Accompanying increases in amounts of data, magnetic recording media are desired, which have high capacity, are inexpensive, and preferably enable readout of necessary portions in a short time, that is, capable of so-called high speed access. As examples of magnetic recording media, there are high density magnetic recording media, such as ZIP^{™} disks (Iomega Corp.), which are constituted by hard disks or flexible disks. Data recording regions of the high density magnetic recording media are constituted by narrow tracks. So-called tracking servo technology plays an important role in enabling a magnetic head to accurately scan the narrow track and to reproduce signals at a high S/N ratio. Conventionally, the sector servo method is widely employed to perform the tracking servo.

The sector servo method records servo data, such as: servo signals for positioning tracks; address data signals of the tracks; and reproduction clock signals; in servo fields, which are regularly provided on a data surface of a disk at uniform angles. Magnetic heads scan the servo fields and read out the servo data, to confirm or correct their positions.

A technique that employs reproduction amplitude data of servo signals is commonly used as the servo signals for positioning tracks. A typical servo signal pattern comprises A, B, C, and D bursts. An A burst bit row that constitutes the A burst, and a B burst bit row that constitutes the B burst are recorded such that each bit is shifted 1/2 track width from the center line of the track. When a magnetic head scans the servo field, the positioning servo is applied such that the reproduction signal amplitude of the A and B burst bit rows are equal.

It is necessary for servo data to be recorded on magnetic recording media as preformatting during manufacture thereof. Presently, preformatting is performed by dedicated servo writing apparatuses. A servo writing apparatus comprises a magnetic head, having a head width approximately 75% of a track pitch. A disk is rotated in a state in which the magnetic head is close to the disk, and servo signals are recorded while moving the magnetic head toward the center of the disk in 1/2 track increments from the outer periphery thereof. Therefore, preformat recording on a single disk requires a long period of time, which is a problem in production efficiency.

On the other hand, magnetic transfer methods that transfer patterns bearing servo data, which are formed on master carriers, onto magnetic recording media have been proposed as an accurate and efficient method of performing preformatting, in Japanese Unexamined Patent Publication Nos. 10 (1998)-040544 and 10(1998)-269566.

The magnetic transfer method employs patterned master carriers that have uneven transfer patterns formed by protrusions and recesses that correspond to data to be transferred to a magnetic recording medium (slave medium), such as a magnetic disk. The patterned master carrier and the slave medium are placed into close contact, then a transfer magnetic field is applied thereto, thereby magnetically transferring the magnetic pattern that corresponds to data borne by the uneven pattern (for example, servo signals)onto the slave medium. The recording is enabled to be performed statically, without changing the relative positions between the master carrier and the slave medium. The magnetic transfer method has the advantages that accurate preformatting is enabled in an extremely short amount of time.

Presently, the further narrowing of track widths is being contemplated, in order to increase the recording capacities of magnetic disk media. For example, there are magnetic disk media about to be realized, having track pitches of approximately 200nm.

Meanwhile, during writing of servo signals by the servo writing apparatuses that employ magnetic heads, servo signals are shifted from their proper writing positions due to write bleed at head edges and recording demagnetization. This causes a problem that burst bits, which are ideally recorded with shape uniformity among all buts, are not uniformly recorded at the edges in the track width direction (radial direction of the disk) thereof. The effects of disorder at the edges of the burst bits become more conspicuous as track widths are narrowed, and at a track pitch of 200nm, the effects cannot be ignored.

If the aforementioned write bleed is present at the edges of an A burst bit and a B burst bit in the track width direction, even if the servo is applied such that the reproduction amplitudes thereof are equal, there is a possibility that the positioning accuracy will be reduced.

In addition, there is a possibility that positioning accuracy will also be reduced, due to the reproduction amplitudes of the A burst bit row and the B burst bit row becoming smaller, along with the narrowing of the track pitch.

### SUMMARY OF THE INVENTION

The present invention relates to a magnetic recording medium as initially described further characterised in that the recording region of the A burst bits and the recording region of the B burst bits overlap in the track width direction at a central portion only of the second track.

The present invention also relates to a method for producing a magnetic recording medium according to claim 3.

Furthermore, the present invention relates to a patterned master carrier as initially described characterised in that the upper surfaces of the A burst bit elements and the upper surfaces of the B burst bit elements overlap in the track width direction at a central portion only of the second track.

Additionally, the present invention relates to a magnetic recording/reproduction apparatus according to claim 6.

The present invention has been developed in view of the circumstances above. At least one embodiment of the present invention provides a magnetic recording medium that is capable of accurately performing reproduction amplitude servo control, and a method for producing the magnetic recording medium.

At least one embodiment of the present invention provides a patterned master carrier for magnetic transfer, which is employed in the method for producing the magnetic recording medium.

Note that it is desirable that the ends, in the track width direction, of the recording region of the A burst bits and the recording region of the B burst bits are rounded.

The magnetic recording medium of the present invention may be produced by recording the A burst bits and the B burst bits using a conventional dedicated servo track writer. However, this would require that the head movements be made finer, which would further decrease production efficiency. Therefore, it is preferable that the magnetic recording medium be produced by magnetic transfer. Note that in the case that the edges, in the track width direction, of the recording regions of the burst bits are rounded, the magnetic recording medium is produced by magnetic transfer.

In an embodiment of the method described above, the burst bits of the magnetic recording medium are in 1 to 1 correspondence with the burst bit elements of the master carrier. Similarly, the burst bit rows of the magnetic recording medium correspond to the element rows of the master carrier.

For the patterned master carrier it is desirable, that the ends, in the track width direction, of the upper surfaces of the A burst bit elements and the upper surfaces of the B burst bit elements are rounded.

A single burst bit or a plurality of burst bits may constitute the A burst bit row and the B burst bit row, which are recorded on the magnetic recording medium. In the case that a plurality of burst bits are employed, the lengths of each recording region in the track width direction are equal, and the positions of the edges thereof in the track width direction match. Similarly, a single burst bit element or a plurality of burst bit elements may constitute the A element row and the B element row, which are formed on the patterned master carrier for magnetic transfer. In the case that a plurality of burst bit elements are employed, the lengths of the upper surfaces of each bit element are equal, and the positions of the edges thereof in the track width direction match.

It is desirable that the recording regions of the A burst bits and the B burst bits, as well as the upper surfaces of the A burst bit elements and the B burst elements overlap with the track center of the second track as their centers.

Note that the recording regions of the burst bits, which are recorded on the magnetic recording medium, and the upper surfaces of the burst bit elements, which are formed on the patterned master carrier for magnetic transfer may have rounded ends in the track width direction. The "rounded ends" include shapes in which the corners of a rectangle are rounded and comprise a straight line at a portion of an edge, in addition to shapes which are entirely arcuate.

In addition, "close contact" as used herein refers to states in which the patterned master carrier and the magnetic recording medium are in proximity to each other with a uniform gap therebetween, in addition to cases in which they are completely in close contact with each other.

The magnetic recording/reproduction apparatus of the present invention is characterized by housing the magnetic recording medium of the present invention. Note that here, "housing the magnetic recording medium" refers to placing the magnetic recording medium in a position, at which a recording/reproducing head of the magnetic recording/reproduction apparatus is capable of reading from and writing onto the magnetic recording medium. During times other than magnetic recording or magnetic reproduction, the magnetic recording medium may be fixed in the aforementioned position, or removed therefrom.

The magnetic recording medium of the present invention has the amplitude servo pattern recorded thereon, the amplitude servo pattern comprising: an A burst bit row, formed of A burst bits which are recorded across a first track and a second track adjacent thereto; and a B burst bit row, formed of B burst bits which are recorded across the second track and a third track adjacent thereto at a position different from that of the Aburst bit row in the track direction, wherein: the lengths, in the track width direction, of the recording region of the A burst bits and the recording region of the B burst bits are greater than a track pitch; and the recording region of the A burst bits and the recording region of the B burst bits overlap in the track width direction at a central portion of the second track. Therefore, the recording regions of the A burst bits and the B burst bits can be made larger than conventional patterns. Accordingly, even if write bleed or recording demagnetization occurs at the ends in the track width direction of the recording regions of each bit, the effects imparted thereby are reduced, thereby suppressing reduction in accuracy of servo positioning.

Particularly in cases in which the magnetic recording medium has narrow track widths of 200nm or less, conventionally there had been problems of decreased reproduction output from the A burst bits and the B burst bits, and also of reduced S/N ratios. However, by recording the A burst bits and the B burst bits such that portions thereof overlap with each other, the recording regions of the burst bits can be made larger, thereby increasing reproduction output. In addition, by appropriately setting the overlapping ratios, the inclination of the basic index of amplitude reproduction servo (A-B) / (A+B) (here, A and B represent the amplitude of reproduced signals from the A burst bit row and the B burst bit row, respectively) can be easily controlled within a given range.

The method for producing a magnetic recording medium of the present invention performs recording of the A burst bits and the B burst bits by magnetic transfer, employing a patterned master carrier for magnetic transfer. Therefore, problems, such as write bleed at the ends of bits and recording demagnetization, that occur when employing dedicated servo writing apparatuses that utilize heads are prevented. Accordingly, favorable bit recording can be performed.

The patterned master carrier for magnetic transfer of the present invention is a patterned master carrier for magnetic transfer, on which an amplitude servo pattern is recorded, the amplitude servo pattern comprising: an A element row, formed of A burst bit elements which are recorded across a first track and a second track adjacent thereto; and a B element row, formed of B burst bit elements which are recorded across the second track and a third track adjacent thereto at a position different from that of the A burst bit row in the track direction; wherein: the lengths, in the track width direction, of the upper surfaces of the A burst bit elements and the upper surfaces of the B burst bit elements are greater than a track pitch; and the upper surfaces of the A burst bit elements and the upper surfaces of the B burst bit elements overlap in the track width direction at a central portion of the second track. Therefore, if this patterned master carrier is employed, the magnetic recording medium of the present invention can be easily produced.

Note that the ends, in the track width direction, of the upper surfaces of the A burst bit elements and the upper surfaces of the B burst bit elements may be rounded. In this case, obtainment of burst bit elements having uniform edge quality is facilitated during production of the master carrier. In addition, burst bits having uniform edge quality can be transferred onto the magnetic recording medium during magnetic transfer, due to the effects of magnetic saturation.

### BRIEF DESCRIPTION OF THE DRAWINGS

FIG. 1 is a partial magnified view of the surface of a magnetic recording medium according to a first embodiment of the present invention.
FIG. 2 is a partial magnified view of the surface of a magnetic recording medium according to a second embodiment of the present invention.
FIG. 3 is a partial magnified view of the surface of a magnetic recording medium according to a third embodiment of the present invention.
FIGS. 4A, 4B, and 4c illustrate a patterned master carrier for magnetic transfer, wherein FIG. 4A is a plan view, FIG. 4B is a partial magnified view, and FIG. 4C is a sectional view taken along line IVC-IVC of FIG. 4B.
FIGS. 5A, 5B, and 5C are diagrams for explaining the basic steps of magnetic transfer.
FIGS. 6A and 6B illustrate examples of the shapes of the upper surfaces of burst bit elements, which are formed on patterned master carriers for magnetic transfer.

### DESCRIPTION OF THE PREFERRED EMBODIMENTS

Hereinafter, embodiments of the present invention will be described in detail with reference to the attached drawings.

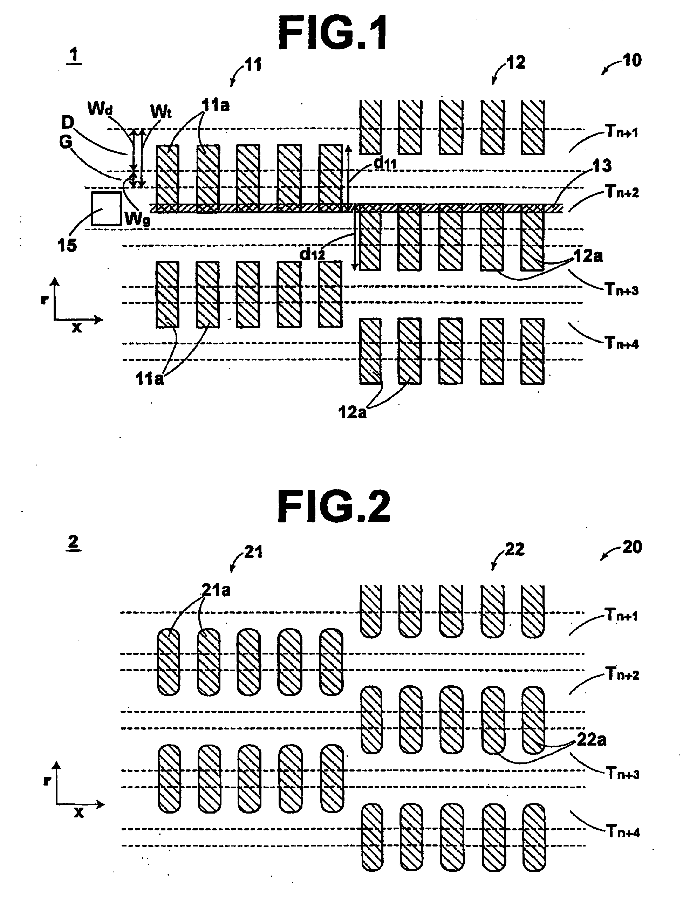

FIG. 1 illustrates a first embodiment of the magnetic recording medium of the present invention. FIG. 1 is a partial magnified view of a recording/reproduction layer of the magnetic recording medium 1, and illustrates a portion of a servo signal pattern. The magnetic recording medium 1 is a discoid magnetic recording medium, such as a high density flexible disk or a hard disk, and comprises a substrate and a magnetic layer provided on one or both sides of the substrate. Note that a thin coated magnetic layer or a metallic thin film magnetic layer is favorable as the recording/reproduction layer, in order to achieve high density recording. The substrate may be either flexible or hard.

Concentric or spiral tracks are formed on the recording/reproduction layer of the magnetic recording medium 1. In the present embodiment, a magnetic pattern 10 that bears servo signals is recorded on the magnetic recording medium 1 of the present embodiment. Servo signals are recorded within servo fields, which are formed in thin regions that extend substantially radially outward at equidistant intervals from the center of the disk. The servo signals are employed in servo tracking of a head during reproduction. The magnetic pattern 10 may be visually confirmed by means of magnetic development, as necessary.

As illustrated in FIG. 1, data tracks D and guard bands G are formed sequentially adjacent to each other on the recording/reproduction layer of the magnetic recording medium 1. Note that a width Wt, which is the sum of a width Wd of each data track D and a width Wg of each guard band G, corresponds to a track pitch. Here, the track pitch Wt is set to be approximately 200nm or less. A reproduction head 15 is illustrated in FIG. 1 as a reference. The reproduction head 15 is positioned by the servo signals so that it passes through the data tracks D. The length of the reproduction head 15 in the track width direction is generally shorter than the data track width Wd. In FIG. 1, arrow x indicates the track direction, and arrow r indicates the track width direction. note that the arrow r coincides with the radial direction of the disk.

Tracking servo signals, comprising reproduction amplitude servos constituted by A, B, C, and D bursts, for positional control are recorded onto the magnetic recording medium 1 as the magnetic pattern 10. FIG. 1 illustrates the portion of the magnetic pattern 10, at which an A burst bit row 11 and a B burst bit row 12 are recorded, among four tracks. A burst bits 11a constitute the A burst bit row 11, which is employed to position the head 15 along a second track Tₙ₊₂. The recording regions of the A burst bits 11a straddle a first track Tₙ₊₁ and the second track Tₙ₊₂. The recording regions of B burst bits 12a that constitute the B burst bit row 12 straddle the second track Tₙ₊₂ and a third track Tₙ₊₃. The A burst bits 11a, which are recorded straddling the first track Tₙ₊₁ and the second track Tₙ₊₂, are also employed to position the head 15 along the first track Tₙ₊₁. Meanwhile, the B burst bits 12a, which are recorded straddling the second track Tₙ₊₂ and the third track Tₙ₊₃, are also employed to position the head 15 along the third track Tₙ₊₃. The portions of the surface of the recording/reproduction layer indicated by hatching in FIG. 1 are the burst bit recording regions. The burst bit recording regions are magnetized at opposite polarities from the other portions of the recording/reproduction layer.

The lengths in the track width direction d₁₁ and d₁₂, of the recording regions of the A burst bits 11a and the B burst bits 12a respectively, are greater than the track pitch Wt. The recording regions of the burst bits 11a and 12a overlap in the track width direction at a center portion 13, which is at the center of the second track Tₙ₊₂ in the track width direction.

Positioning servo is applied to the magnetic head 15 so that reproduction amplitudes A and B, of the A burst bit row 11 and the B burst bit row 12 respectively, become equal, and the magnetic head 15 is positioned along the second track Tₙ₊₂. Conventional burst bits, which are of the same width as a track pitch, are formed straddling two tracks. Therefore, conventional burst bits are recorded within regions of single data tracks corresponding to half of the track in the width direction thereof. However, the burst bits 11a and 12a of the present embodiment are both recorded in a region beyond the center of a data track in the width direction thereof. Therefore, when compared within the same track width, the amplitude of reproduced signals can be made greater than that of conventional burst bits. Accordingly, effects caused by write bleed at the ends of the burst bits and recording demagnetization can be reduced, in the case that the magnetic pattern illustrated in FIG. 1 is recorded using a dedicated servo track writer.

Note that in the case that a dedicated servo track writer records the magnetic pattern illustrated in FIG. 1, the head movements during writing become extremely complex, thereby requiring even more time for the servo writing operation than when writing conventional servo signal patterns. Accordingly, it is desirable that magnetic transfer be employed to record magnetic patterns such as that illustrated in FIG. 1.

Next, a second embodiment of the magnetic recording medium of the present invention will be described. FIG. 2 is a partial magnified view of a recording/reproduction layer of the magnetic recording medium 2, and illustrates a portion of a servo signal pattern. The magnetic recording medium 2 illustrated in FIG. 2 differs from the magnetic recording medium 1 illustrated in FIG. 1 in the following point. That is, the ends, in the track width direction, of the recording regions of burst bits 21a that constitute an A burst bit row 21 and of burst bits 22a that constitute a B burst bit row 22, are rounded. The burst bits 21a and 22a of the second embodiment are also recorded in a region beyond the center of a data track in the width direction thereof. Therefore, when compared within the same track width, the amplitude of reproduced signals can be made greater than that of conventional burst bits.

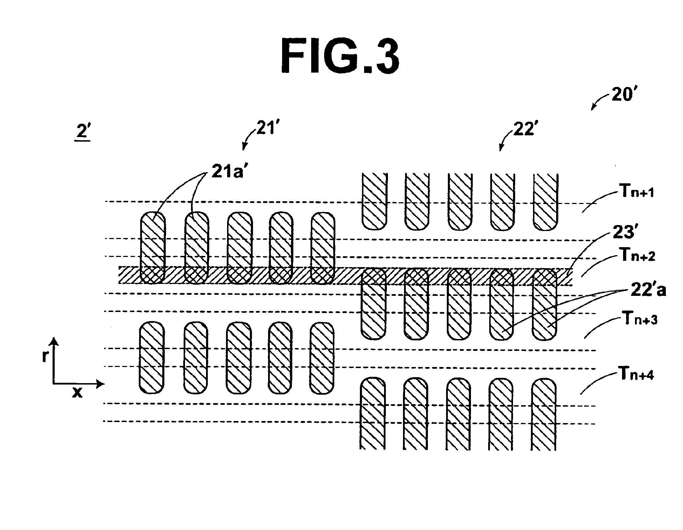

FIG. 3 illustrates a magnetic recording medium 2' according to a third embodiment of the present invention. FIG. 3 is a partial magnified view of a portion of the recording/reproduction layer of the magnetic recording medium 2'. As illustrated in FIG. 3, the lengths of the recording regions of A burst bits 21a' and B burst bits 22a' in the track width direction may be extended to a degree such that the recording regions do not cross the data track, thereby causing the overlapped areas between the burst bits 21a' and 22a' to become greater.

Regarding a magnetic recording/reproduction apparatus that houses the magnetic recording media according to each of the embodiments above, highly accurate servo positioning can be realized. This is because the amplitude of reproduced signals can be made greater.

Note that it is difficult for a conventional servo track writer to record burst bits having rounded ends. Therefore, magnetic patterns, such as that illustrated in FIG. 2, are recorded employing magnetic transfer.

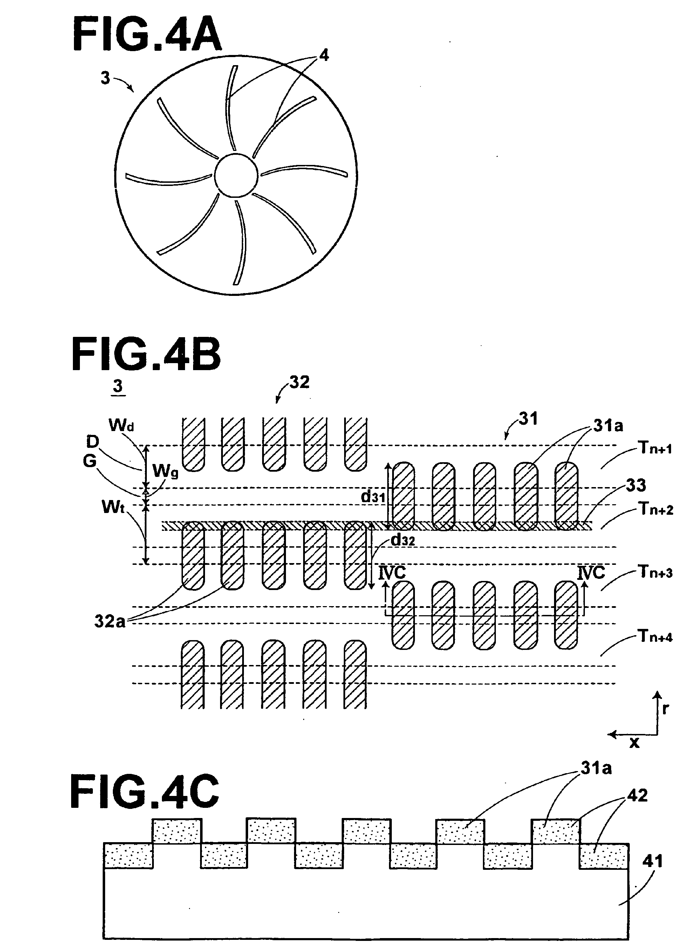

A patterned master carrier for magnetic transfer 3 (hereinafter, simply referred to as "master carrier") is illustrated in FIGS. 4A, 4B, and 4C. FIG. 4A is a plan view of the master carrier 3, FIG. 4B is a magnified view of a portion of FIG. 4A, and FIG. 4C is a sectional view taken along line IVC-IVC of FIG. 4B.

As illustrated in FIG. 4A, the master carrier 3 is discoid in shape, and has servo fields 4 formed in thin regions that extend substantially radially outward at equidistant intervals from the center thereof. Uneven patterns, formed by protrusions and recesses that correspond to servo signals, are formed in the servo fields 4. FIG. 4B is a magnified view of a portion of the surface of the master carrier 3 within a servo field 4, at which A element rows and B element rows that correspond to the A burst bit rows and the B burst bit rows of the magnetic recording medium 2 illustrated in FIG. 2 are formed. Tracks, equivalent to those of the magnetic recording medium 2, are formed within the servo field 4, and the uneven pattern is formed along the tracks. The widths of the tracks, data tracks D and guard bands G of the master carrier 3 that correspond to those of the magnetic recording medium 2 are denoted by the same reference numerals.

The portions indicated by hatching in FIG. 4B are the upper surfaces of A burst bit elements 31a and B burst bit elements 32a that correspond to the A burst bits 21a and the B burst bits 22a of the magnetic recording medium 2, respectively. The A burst bit elements 31a are formed so as to straddle a first track Tₙ₊₁ and a second track Tₙ₊₂. The B burst bit elements 32a are formed so as to straddle the second track Tₙ₊₂ and a third track Tₙ₊₃. The lengths in the track width direction d₁₁ and d₁₂, of the upper surfaces of the A burst bit elements 31a and the B burst bit elements 32a respectively, are greater than a track pitch Wt. The ends of the burst bit elements 31a and 32a overlap in the track width direction at a center portion 33, which is at the center of the second track Tₙ₊₂ in the track width direction. In addition, the ends of the burst bit elements 31a and 32a are rounded.

As illustrated in the partial sectional view of FIG. 4C, the master carrier 3 comprises: a substrate 41 that has an uneven pattern on the surface thereof; and a magnetic layer 42 formed on the substrate 41. In the present embodiment, the protrusions of the uneven pattern constitute the burst bit elements 31a and 32a.

The substrate 41 is preferably formed by ferromagnetic Ni or an alloy having Ni as a main component. Production of the substrate 41 having the uneven pattern on its surface may be performed by the stamper method, photolithography, and the like. The height of the protrusions on the substrate (depth of the uneven pattern) is 50 to 800nm, for example. The length of the protrusions of the uneven pattern in the radial direction is 0. 05 to 20µm, and the length in the circumferential direction is 0.05 to 5µm.

Co, Co alloys (CoNi, CoNiZr, CoNbTaZr, etc.), Fe, Fe alloys (FeCo, FeCoNi, FeNiMo, FeAlSi, FeAl, and FeTaN), Ni, and Ni alloys (NiFe) are suitable as materials for the magnetic layer 42. Magnetic layers having low magnetic coercive force, such as soft magnets and semi hard magnets, are employed as the magnetic layer 42. Note that the thickness of the magnetic layer 42 (the thickness of the magnetic layer on the upper surfaces of the protrusions) is 50 to 500nm.

A protective layer of diamond like carbon (DLC) having a thickness of 5 to 30nm may be provided on the magnetic layer 42 to improve the durability thereof. Further, a lubricant layer may be provided. A close contact enhancing layer formed of Si or the like may also be provided between the magnetic layer and the protective layer.

Note that the construction of the patterned master carrier for magnetic transfer is not limited to that of the master carrier of the above embodiment. Any construction may be adopted, as long as the master carrier bears servo signals as an uneven pattern. The master carrier may be constituted by: only a magnetic substrate having an uneven pattern on its surface; a substrate having an uneven pattern on its surface and a magnetic layer provided at least on the upper surfaces of the protrusions of the pattern; a nonmagnetic substrate having an uneven pattern on its surface and a magnetic layer embedded within the recesses of the pattern; a flat substrate and a magnetic layer having an uneven pattern on its surface; and the like. Note that in the case that the patterned master carrier is constituted by a nonmagnetic substrate having an uneven pattern on its surface and a magnetic layer embedded within the recesses of the pattern, the aforementioned bit elements are constituted by the magnetic layer embedded within the recesses.

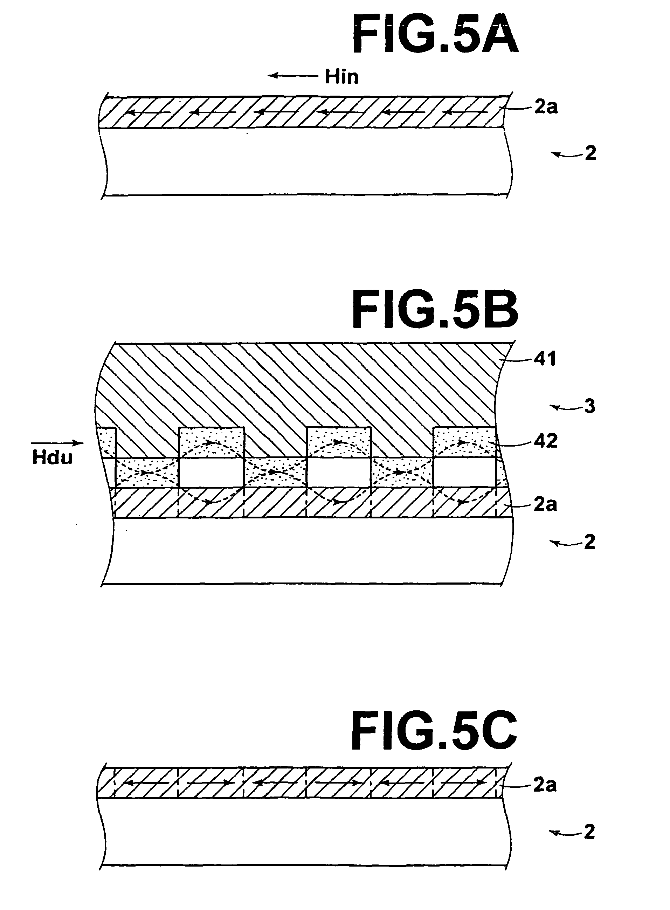

Next, the method by which the aforementioned patterned master carrier for magnetic transfer is employed to record the magnetic pattern onto a magnetic disk medium will be described. The recording of the magnetic disk medium is performed by magnetic transfer, which magnetically transfers data to a magnetic recording medium (slave medium) by employing a master carrier. The basic principles of magnetic transfer will be described with reference to FIGS. 5A, 5B, and 5C.

FIGS. 5A, 5B, and 5C are diagrams for explaining the basic steps of magnetic transfer. FIG. 5A illustrates a step in which the slave medium is initially magnetized by unidirectionally applying a DC magnetic field thereto. FIG. 5B illustrates a step in which a magnetic field is applied in substantially the opposite direction from that of the DC initial magnetic field while the master carrier and the slave medium are in close contact with each other. FIG. 5C illustrates the state of the magnetic recording surface of the slave medium following magnetic transfer.

First, as illustrated in FIG. 5A, the slave medium 2 is initially magnetized in advance, by applying a DC initial magnetic field Hᵢₙ in one track direction. Then, as illustrated in FIG. 5B, the recording surface of the slave medium 2 is brought into close contact with the transfer pattern surface of the master medium 3, and a transfer magnetic field H_{du} is applied in the direction opposite to that of the initial DC magnetic field Hᵢₙ. At the locations where the slave medium 2 and the transfer pattern of the master carrier 3 are in close contact, the transfer magnetic field H_{du} is absorbed by the protrusion portions of the master carrier 3. The magnetization of the slave medium 2 at the positions corresponding to the protrusions of the master carrier 3 is not inverted, whereas the magnetization at other positions is inverted by magnetic field leakage from the protrusions. As a result, as shown in FIG. 5C, a magnetic pattern corresponding to the uneven pattern of the master carrier 3 is magnetically transferred and recorded onto a magnetic recording layer 2a of the slave medium.

Note that it is necessary for the intensities of the initial magnetic field and the transfer magnetic field to be determined, considering the magnetic coercive force of the magnetic layer of the magnetic recording medium, and the magnetic permeability ratio between the master carrier and the magnetic layer of the magnetic recording medium.

It is difficult for a conventional servo track writer to record burst bits having rounded ends, as in the magnetic pattern 20 illustrated in FIG. 2. However, the recording of this type of pattern is facilitated by employing magnetic transfer, as in the present embodiment. Note that the magnetic pattern 10 illustrated in FIG. 1 can also be recorded accurately and in a shorter amount of time by magnetic transfer, compared to a servo track writer.

Note that in the case that servo patterns are recorded onto magnetic recording media by magnetic transfer employing master carriers, it is preferable that the upper surfaces of burst bit elements, which are formed on the master carriers, are rounded at their ends in the track width direction, as illustrated in FIG. 4B. Due to the nature of master carriers which are produced by the stamper method and the like, bit elements having uniform shapes at the ends thereof are easily formed if the ends are rounded, when the elements are drawn with laser beams or electron beams. In addition, bit elements having rounded ends are superior in magnetic transfer properties, compared to bit elements having rectangular upper surfaces. This is due to the effects of magnetic saturation during magnetic transfer. Accordingly, favorable magnetic patterns can be formed on magnetic recording media by employing the bit elements having rounded ends.

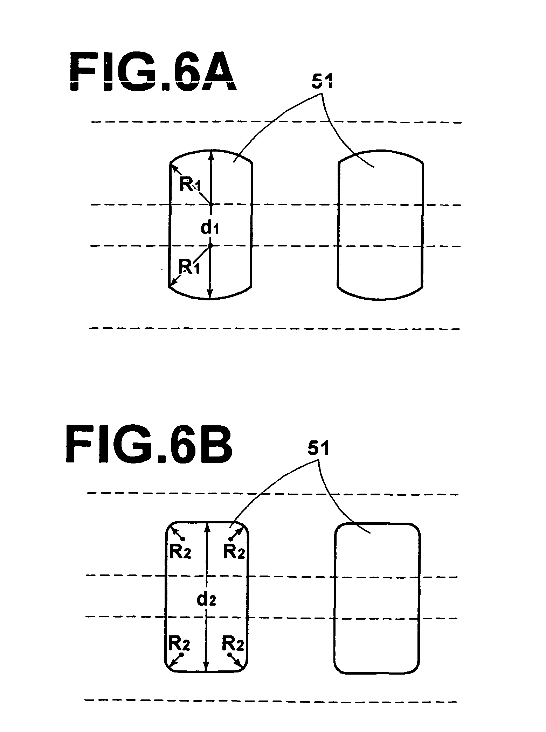

FIGS. 6A and 6B illustrate examples of the shapes of the upper surfaces of burst bit elements 51, which are formed on master carriers. The ends of the upper surfaces of the burst bit elements 51 in the track width direction may be arcuate as a whole, as illustrated in FIG. 6A. Alternatively, the upper surfaces may comprise straight lines at portions of their edges, and have only the corners thereof rounded, as illustrated in FIG. 6B.

Note that in the case that the shape illustrated in FIG. 6A is adopted, it is preferable that the radius R1 of the arc and the length d1 of the element 51 in the track width direction satisfy the relationship: 0.25 x d1 ≤ R1 ≤ 0.5 x d1. In the case that the shape illustrated in FIG. 6B is adopted, it is also preferable that the radius R2 of the arc and the length d2 of the element 51 in the track width direction satisfy the relationship: 0.25 x d2 ≤ R2 ≤ 0.5 x d2.

## Claims

1. A magnetic recording medium, comprising:
a substrate; and
a magnetic layer, on which an amplitude servo pattern (10, 20, 20') is recorded, the amplitude servo pattern (10) comprising:
an A burst bit row (11, 21, 21'), formed of A burst bits (11a, 21a, 21a') which are recorded across a first track (Tₙ₊₁) and a second track (Tₙ₊₂) adjacent thereto; and
a B burst bit row (12, 22, 22'), formed of B burst bits (12a, 22a, 22a') which are recorded across the second track (Tₙ₊₂) and a third track (Tₙ₊₃) adjacent thereto at a position different from that of the A burst bit row (11, 21, 21') in the track direction (x), wherein:
the lengths (d₁₁, d₁₂), in the track width direction (r), of the recording region of the A burst bits and the recording region of the B burst bits are greater than a track pitch (Wt) ;
**characterised in that** the recording region of the A burst bits and the recording region of the B burst bits overlap in the track width direction (r) at a central portion (13, 23') only of the second track (Tₙ₊₂).

2. A magnetic recording medium as defined in claim 1, wherein:
the ends, in the track width direction (r), of the recording region of the A burst bits (11a, 21a, 21a') and the recording region of the B burst bits (12a, 22a, 22a') are rounded.

3. A method for producing a magnetic recording medium, comprising the steps of:
placing a patterned master carrier (3) for magnetic transfer, on which an amplitude servo pattern is recorded, the amplitude servo pattern comprising: an A element row (31), formed of A burst bit elements (31a) which are recorded across a first track (Tₙ₊₁) and a second track (Tₙ₊₂) adjacent thereto; a B element row (32), formed of B burst bit elements (32a) which are recorded across the second track (Tₙ₊₂) and a third track (Tₙ₊₃) adjacent thereto at a position different from that of the A burst bit row (31) in the track direction (x); wherein the lengths, in the track width direction (r), of the upper surfaces of the A burst bit elements (31a) and the upper surfaces of the B burst bit elements (32a) are greater than a track pitch (Wₜ) ; and the upper surfaces of the A burst bit elements (31a) and the upper surfaces of the B burst bit elements (32a) overlap in the track width direction (r) at a central portion (33) only of the second track (Tₙ₊₂); into close contact with a magnetic recording surface of the magnetic recording medium; and
applying a magnetic field onto the patterned master carrier for magnetic transfer and the magnetic recording medium, which are in close contact, thereby magnetically transferring the amplitude servo pattern onto the recording surface of the magnetic recording medium.

4. A patterned master carrier for magnetic transfer, comprising:
a substrate (41); and
a magnetic layer (42), on which an amplitude servo pattern is recorded, the amplitude servo pattern comprising:
an A element row (31), formed of A burst bit elements (31a) which are recorded across a first track (Tₙ₊₁) and a second track (Tₙ₊₂) adjacent thereto; and
a B element row (32), formed of B burst bit elements (32a) which are recorded across the second track (Tₙ₊₂) and a third track (Tₙ₊₃) adjacent thereto at a position different from that of the A burst bit row (31) in the track direction; wherein:
the lengths, in the track width direction (r), of the upper surfaces of the A burst bit elements (31a) and the upper surfaces of the B burst bit elements (32a) are greater than a track pitch (Wₜ);
**characterised in that**
the upper surfaces of the A burst bit elements (31a) and the upper surfaces of the B burst bit elements (32a) overlap in the track width direction (r) at a central portion (33) only of the second track (Tₙ₊₂).

5. A patterned master carrier for magnetic transfer as defined in claim 4, wherein:
the ends, in the track width direction (r), of the upper surfaces of the A burst bit elements (31a) and the upper surfaces of the B burst bit elements (32a) are rounded.

6. A magnetic recording/reproduction apparatus housing a magnetic recording medium as defined in either claim 1 or claim 2.

## Patentansprüche

1. Magnetisches Aufzeichnungsmedium, umfassend:
ein Substrat; und
eine magnetische Schicht, auf der ein Amplituden-Servo-Muster (10, 20, 20') aufgezeichnet wird, wobei das Amplituden-Servo-Muster (10) umfasst:
eine A-Burstbit-Reihe (11, 21, 21'), die aus A-Burstbits (11a, 21a, 21a') gebildet ist, welche auf einer ersten Spur (Tₙ₊₁) und einer dazu benachbarten zweiten Spur (Tₙ₊₂) aufgezeichnet werden; und
eine B-Burstbit-Reihe (12, 22, 22'), die aus B-Burstbits (12a, 22a, 22a') gebildet ist, welche auf der zweiten Spur (Tₙ₊₂) und einer dazu benachbarten dritten Spur (Tₙ₊₃) an einer Position aufgezeichnet werden, die in der Spurrichtung x von jener der A-Burstbit-Reihe (11, 21, 21') verschieden ist, wobei:
die Längen (d₁₁, d₁₂) in der Spurbreitenrichtung (r) des Aufzeichnungsbereichs der A-Burstbits und des Aufzeichnungsbereichs der B-Burstbits größer als der Spurabstand (Wₜ) ist;
**dadurch gekennzeichnet, dass** sich der Aufzeichnungsbereich der A-Burstbits und der Aufzeichnungsbereich der B-Burstbits in der Spurbreitenrichtung (r) in einem mittleren Abschnitt (13, 23') lediglich der zweiten Spur (Tₙ₊₂) überlappen.

2. Magnetisches Aufzeichnungsmedium nach Anspruch 1, wobei:
die Enden des Aufzeichnungsbereichs der A-Burstbits (11a, 21a, 21a') und des Aufzeichnungsbereichs der B-Burstbits (12a, 22a, 22a') in der Spurbreitenrichtung (r) abgerundet sind.

3. Verfahren zur Herstellung eines magnetischen Aufzeichnungsmediums, umfassend die folgenden Schritte:
Platzieren eines gemusterten Masterträgers zum magnetischen Transfer, auf den ein Amplituden-Servo-Muster aufgezeichnet wird, in engen Kontakt mit einer magnetischen Aufzeichnungsoberfläche des magnetischen Aufzeichnungsmediums; wobei das Amplituden-Servo-Muster umfasst: eine A-Elementenreihe (31), die aus A-Burstbit-Elementen (31a) gebildet ist, welche auf einer ersten Spur (Tₙ₊₁) und einer dazu benachbarten zweiten Spur (Tₙ₊₂) aufgezeichnet werden; eine B-Elementenreihe (32), die aus B-Burstbit-Elementen (32a) gebildet ist, welche auf der zweiten Spur (Tₙ₊₂) und einer dazu benachbarten dritten Spur (Tₙ₊₃) an einer Position aufgezeichnet werden, die von jener der A-Burstbit-Reihe (31) in der Spurrichtung (x) verschieden ist; wobei die Längen der oberen Oberflächen der A-Burstbit-Elemente (31a) und der oberen Oberflächen der B-Burstbit-Elemente (32a) in der Spurbreitenrichtung (r) größer als ein Spurabstand (Wₜ) sind; und die oberen Oberflächen der A-Burstbit-Elemente (31a) und die oberen Oberflächen der B-Burstbit-Elemente (32a) sich in der Spurbreitenrichtung (r) in einem mittleren Teil (33) lediglich der zweiten Spur (Tₙ₊₂) überlappen; und
Anlegen eines Magnetfelds an dem gemusterten Masterträger zum magnetischen Transfer und dem magnetischen Aufzeichnungsmedium, welche sich in engem Kontakt befinden, wodurch das Amplituden-Servo-Muster auf die Aufzeichnungsoberfläche des magnetischen Aufzeichnungsmediums magnetisch übertragen wird.

4. Gemusterter Masterträger zum magnetischen Transfer, umfassend:
ein Substrat (41); und
eine Magnetschicht (42), auf welcher ein Amplituden-Servo-Muster aufgezeichnet wird, wobei das Amplituden-Servo-Muster umfasst:
eine A-Elementenreihe (31), die aus A-Burstbit-Elementen (31a) gebildet ist, welche auf einer ersten Spur (Tₙ₊₁) und einer dazu benachbarten zweiten Spur (Tₙ₊₂) aufgezeichnet werden; und
eine B-Elementenreihe (32), die aus B-Burstbit-Elementen (32a) gebildet ist, welche auf der zweiten Spur (Tₙ₊₂) und einer dazu benachbarten dritten Spur (Tₙ₊₃) an einer Position aufgezeichnet werden, die von jener der A-Burstbit-Reihe (31) in der Spurrichtung verschieden ist; wobei
die Längen der oberen Oberflächen der A-Burstbit-Elemente (31a) und der oberen Oberflächen der B-Burstbit-Elemente (32a) in der Spurbreitenrichtung (r) größer sind als ein Spurabstand (Wₜ);
**dadurch gekennzeichnet, dass**
die oberen Oberflächen der A-Burstbit-Elemente (31a) und die oberen Oberflächen der B-Burstbit-Elemente (32a) sich in der Spurbreitenrichtung (r) in einem mittleren Teil (33) lediglich der zweiten Spur (Tₙ₊₂) überlappen.

5. Gemusterter Masterträger zum magnetischen Transfer nach Anspruch 4, wobei:
die Enden der oberen Oberfläche der A-Burstbit-Elemente (31a) und der oberen Oberflächen der B-Burstbit-Elemente (32a) in der Spurbreitenrichtung (r) abgerundet sind.

6. Magnetische Aufzeichnungs-/Wiedergabevorrichtung, in der ein magnetisches Aufzeichnungsmedium entweder nach Anspruch 1 oder nach Anspruch 2 untergebracht ist.

## Revendications

1. Support d'enregistrement magnétique, comprenant :
un substrat ; et
une couche magnétique sur laquelle est enregistré un motif de direction d'amplitude (10, 20, 20'), le motif de direction d'amplitude (10) comprenant :
une ligne de bits de rafale A (11, 21, 21'), formée de bits de rafale A (1 1a, 21a, 21a') qui sont enregistrés sur une première piste Tₙ₊₁ et une deuxième piste Tₙ₊₂ adjacente à celle-ci ; et
une ligne de bits de rafale B (12, 22, 22'), formée de bits de rafale B (12a, 22a, 22a') qui sont enregistrés sur la deuxième piste Tₙ₊₂ et une troisième piste Tₙ₊₃ adjacente à celle-ci à une position différente de celle de la ligne de bits de rafale A (11, 21, 21') dans la direction de la piste (x), dans lequel ;
les longueurs (d11, d12), dans le sens de la largeur de la piste (r), de la région d'enregistrement des bits de rafale A et de la région d'enregistrement des bits de rafale B sont supérieures à un pas de piste (Wt) ;
**caractérisé en ce que** la région d'enregistrement des bits de rafale A et la région d'enregistrement des bits de rafale B se chevauchent dans le sens de la largeur de piste (r) au niveau d'une portion centrale (13, 23') seulement de la deuxième piste (Tₙ₊₂).

2. Support d'enregistrement magnétique selon la revendication 1, dans lequel :
les extrémités, dans le sens de la largeur de piste (r), de la région d'enregistrement des bits de rafale A (11a, 21a, 21a') et de la région d'enregistrement des bits de rafale B (12a, 22a, 22a') sont arrondies.

3. Procédé de production d'un support d'enregistrement magnétique, comprenant les étapes consistant à :
placer un support maître sur lequel est formé un motif (3) pour un transfert magnétique, sur lequel est enregistré un motif de direction d'amplitude, le motif de direction d'amplitude comprenant : une ligne d'éléments A (31) formée d'éléments de bit de rafale A (31a) qui sont enregistrés sur une première piste Tₙ₊₁ et une deuxième piste Tₙ₊₂ adjacente à celle-ci ; une ligne d'éléments B (32), formée d'éléments de bit de rafale B (32a) qui sont enregistrés sur la deuxième piste Tₙ₊₂ et une troisième piste Tₙ₊₃ adjacente à celle-ci au niveau d'une position différente de celle de la ligne de bits de rafale A (31) dans la direction de la piste (x) ; dans lequel les longueurs, dans le sens de la largeur de piste (r), des surfaces supérieures des éléments de bit de rafale A (31 a) et des surfaces supérieures des éléments de bit de rafale B (32a) sont supérieures à un pas de piste (Wt) ; et les surfaces supérieures des éléments de bit de rafale A (31a) et les surfaces supérieures des éléments de bit de rafale B (32a) se chevauchent dans le sens de la largeur de piste (r) au niveau d'une portion centrale (33) uniquement de la deuxième piste Tₙ₊₂; en contact étroit avec une surface d'enregistrement magnétique du support d'enregistrement magnétique ; et
appliquer un champ magnétique sur le support maître sur lequel est formé un motif pour transfert magnétique et le support d'enregistrement magnétique, qui sont en contact étroit, transférant ainsi magnétiquement le motif de direction d'amplitude sur la surface d'enregistrement du support d'enregistrement magnétique.

4. Support maître sur lequel est formé un motif pour transfert magnétique, comprenant :
un substrat (41) ; et
une couche magnétique (42), sur laquelle est enregistré un motif de direction d'amplitude, le motif de direction d'amplitude comprenant :
une ligne d'éléments A (31) formée d'éléments de bit de rafale A (31a) qui sont enregistrés sur une première piste (Tₙ₊₁) et une deuxième piste (Tₙ₊₂) adjacente à celle-ci ; et
une ligne d'éléments B (32) formée d'éléments de bit de rafale B (32a) qui sont enregistrés sur la deuxième piste (Tₙ₊₂) et une troisième piste (Tₙ₊₃) adjacente à celle-ci au niveau d'une position différente de celle de la ligne de bits de rafale A (31) dans la direction de la piste ; dans lequel :
les longueurs, dans le sens de la largeur de piste (r), des surfaces supérieures des éléments de bit de rafale A (31 a) et des surfaces supérieures des éléments de bit de rafale B (32a) sont supérieures à un pas de piste (Wt) ;
**caractérisé en ce que**
les surfaces supérieures des éléments de bit de rafale A (31a) et les surfaces supérieures des éléments de bit de rafale B (32a) se chevauchent dans le sens de la largeur de pas (r) au niveau d'une portion centrale (33) uniquement de la deuxième piste (Tₙ₊₂).

5. Support maître sur lequel est formé un motif pour transfert magnétique selon la revendication 4, dans lequel :
les extrémités, dans le sens de la largeur de piste (r), des surfaces supérieures des éléments de bit de rafale A (31a) et des surfaces supérieures des éléments de bit de rafale B (32a) sont arrondies.

6. Appareil d'enregistrement/reproduction magnétique logeant un support d'enregistrement magnétique selon la revendication 1 ou la revendication 2.
